# Europäisches Patentamt

## European Patent Office

## Office europeen des brevets

(11) Veroffentlichungsnummer: **0 204 247**

**A2**

(12) **EUROPÄISCHE PATENTANMELDUNG**

(21) Anmeldenummer: 86107166.0

(22) Anmeldetag: 27.05.86

(51) Int. Cl.⁴: **G 11 B 15/08**

(30) Priorität· 04.06.85 DE 3519976

(43) Veröffentlichungstag der Anmeldung:
10.12.86 Patentblatt 86/50

(84) Benannte Vertragsstaaten:
CH DE FR GB IT LI

(71) Anmelder: **GRUNDIG E.M.V. Elektro-Mechanische Versuchsanstalt Max Grundig & Co. KG.**
**Kurgartenstrasse 37**
**D-8510 Fürth(DE)**

(72) Erfinder: **Schülein, Reinhard**
**Venusstrasse 17**
**D-8507 Oberasbach-Altenberg(DE)**

(72) Erfinder: **Kornhaas, Wolfgang**
**Buschweg 26**
**D-8510 Fuerth(DE)**

(54) **Schaltung für ein Aufzeichnungs- und/oder Wiedergabegerät mit einer optoelektronischen Einrichtung.**

(57) Bei einer Schaltung für ein Video-, Audio- oder Datenaufzeichnungs- und·oder -wiedergabegerät mit einer optoelektronischen Einrichtung zur Erzeugung von Tachoimpulsen und mit einem an die optoelektronische Einrichtung angeschlossenen Komparator sind die beiden Eingänge des Komparators durch einen Widerstand verbunden und ist an den einen Eingang des Komparators ein vom Ausgangssignal der optoelektronischen Einrichtung über den Widerstand aufladbarer Speicher angeschlossen. Dadurch wird die Schaltschwelle für den Komparator automatisch den Pegel- und/oder Amplitudenschwankungen im Ausgangssignal der optoelektronischen Einrichtung angepaßt.

FIG.1

## SCHALTUNG FÜR EIN AUFZEICHNUNGS- UND/ODER WIEDERGABEGERÄT MIT EINER OPTOELEKTRONISCHEN EINRICHTUNG

### BESCHREIBUNG

Die Erfindung betrifft eine Schaltung zur automatischen Anpassung der Schaltschwelle eines Komparators an Pegel- und/oder Amplitudenschwankungen im Ausgangssignal einer Eingangsschaltung, insbesondere für ein Video-, Audio- oder Datenaufzeichnungs- und/oder -wiedergabegerät mit einer optoelektronischen Einrichtung zur Erzeugung von Tachoimpulsen, deren Ausgangssignal dem Eingang des Komparators zugeführt ist.

Bekannte Video-, Audio- oder Datenaufzeichnungs- und/oder -wiedergabegeräte arbeiten zur Erzeugung von Tachoimpulsen mit einer optoelektronischen Einrichtung (beispielsweise mit Leuchtdioden und Fototransistoren) und einem Komparator, dessen Ausgangssignal einem Mikrocomputer und/oder der Bandsteuerung des Geräts zugeführt wird. Die Tachoimpulse werden vorzugsweise benötigt zur Errechnung des Bandzugs, des momentanen Bandstandes und der Bandreserve. Wegen der unvermeidbaren fertigungsbedingten Toleranzen und aufgrund von Alterungseffekten der eingesetzten optoelektronischen Bauelemente ist es nicht möglich, einen allgemein gültigen festen Referenzpunkt (Schaltschwelle) für den Komparator zu finden. Zur Behebung dieses Nachteils könnte für jeden Anwendungsfall eine bestimmte Auswahl von Bauelementen unter Berücksichtigung deren Eigenschaften getroffen werden, was dann allerdings mit hohen Fertigungskosten verbunden ist.

Ein anderer Lösungsweg ergäbe sich aus der EP-OS 0 119 568 derselben Anmelderin, aus der ein Aufzeichnungs- und/oder Wiedergabegerät mit einer Anordnung zur optoelektronischen Bandendabschaltung bekannt ist, bei der mit Hilfe eines Mikrocomputers automatisch die für eine fehlerfreie Erkennung der Bandanfangs- und -endbereiche erforderliche Lage der Schaltschwellen zur Ruhespannung der optoelektronischen Einrichtung eingestellt wird.

Der Erfindung liegt die Aufgabe zugrunde, eine Schaltung der im Oberbegriff des Anspruchs 1 angegebenen Art derart weiterzubilden, daß ohne das Erfordernis eines Mikrocomputers die Schaltschwelle für den Komparator automatisch den Pegel- und/oder Amplitudenschwankungen im Ausgangssignal der optoelektronischen Einrichtung folgt.

Diese Aufgabe wird durch die im kennzeichnenden Teil des Anspruchs 1 angegebenen Merkmale gelöst. Vorteilhafte Weiterbildungen ergeben sich aus den Ansprüchen 2 und 3.

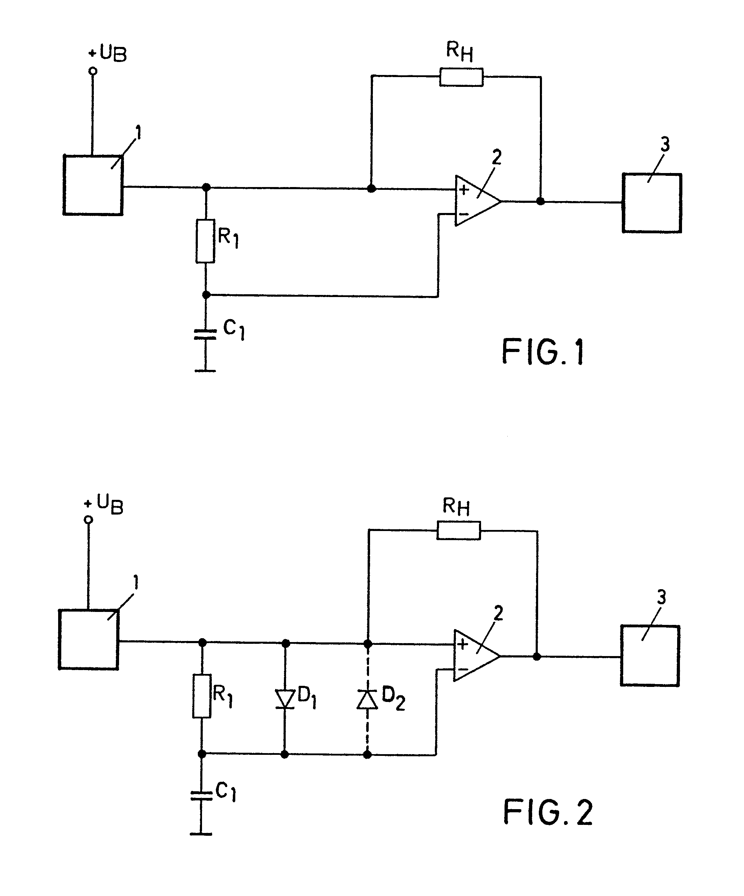

Die Vorteile der Erfindung liegen insbesondere darin, daß mit nur geringem (zusätzlichen) Schaltungsaufwand ein Abgleich der Schaltung - etwa unter Verwendung eines Mikrocomputers - unnötig wird, da sich die Schaltschwelle des Komparators automatisch den jeweiligen Eingangsbedingungen (Pegel- bzw. Amplitudenschwankungen im Ausgangssignal der optoelektronischen Einrichtung) anpaßt. Ferner bringt die Erfindung Kosteneinsparungen bei der Fertigung mit sich, da auch größere Bauelementetoleranzen akzeptiert werden können, ohne daß eine aufwendige Bauelementeauswahl getroffen werden muß. Weitere vorteilhafte Eigenschaften ergeben sich aus den Ausführungsbeispielen, die im folgenden anhand der Figuren 1 u. 2 näher erläutert werden.

Es zeigen:

Fig. 1     ein Ausführungsbeispiel gemäß der
            Erfindung und

Fig. 2     eine vorteilhafte Weiterbildung des
            Ausführungsbeispiels nach Fig. 1.

Zur Erzeugung der Tachoimpulse ist ein mit einer Spannungsquelle + $U_B$ verbundener Optokoppler 1 vorgesehen, der beispielsweise aus einer Leuchtdiode und einem Fototransistor besteht. Der Ausgang des Optokopplers 1 ist mit dem nicht-invertierenden Eingang (+) eines Komparators 2 verbunden, der aufgrund der Rückkopplung über den Widerstand $R_H$ eine Schmitt-Trigger-Charakteristik hat. Dies hat den Vorteil, daß auch im Ruhezustand keine Schwingungen am Komparatorausgang auftreten. Der nicht-invertierende und der invertierende Eingang des Komparators 2 sind über einen Widerstand $R_1$ miteinander verbunden. An den invertierenden Eingang (-) des Komparators 2 ist ferner ein Speicher (Kondensator) $C_1$ angeschlossen. Dieser Speicher wird über den Widerstand $R_1$ vom Ausgangssignal des Optokopplers 1 aufgeladen. Das Ausgangssignal des Komparators 2 wird zur Errechnung des Bandzugs, des momentanen Bandstands und der Bandreserve vorzugsweise unter Einsatz eines Mikrocomputers verwendet und/oder der Bandsteuerung 3 zur Steuerung des Bandantriebs zugeführt, z. B. zur Unterbrechung des Bandtransports im Störungsfall.

Um ein sicheres Ansprechen des Komparators 2 sicherzustellen, muß gewährleistet sein, daß die Schaltschwelle des Komparators 2 immer den Eingangsbedingungen angepaßt ist. Dies ist bei einer Schaltung nach Figur 1 der Fall, wie im folgenden näher erläutert wird.

Das Ausgangssignal des Optokopplers enthält einen Gleichspannungsanteil und einen diesem überlagerten Wechselspannungsanteil, wobei sowohl der Gleichspannungspegel als auch die Wechselspannungsamplitude von Fall zu Fall verschieden sind. Mit diesem Ausgangssignal des Optokopplers 1 wird über den Widerstand $R_1$ der Kondensator $C_1$ aufgeladen. Am invertierenden Eingang des Komparators 2 erhält man eine Spannung, die proportional zur Summe aus dem Gleichspannungsanteil und dem Mittelwert des Wechselspannungsanteils des Signals ist. Dadurch liegt die Schaltschwelle des Komparators 2 (bei Sinusansteuerung) stets etwa in der Mitte des Wechselspannungsanteils. Auf diese Weise werden Fertigungstoleranzen und/oder alterungsbedingte Änderungen der Eigenschaften der verwendeten optoelektronischen Bauelemente automatisch ausgeglichen.

Bei einer vorteilhaften Weiterbildung nach Figur 2 ist parallel zum Widerstand $R_1$ eine Diode ($D_1$ bzw. $D_2$) geschaltet, deren Kathode entweder am invertierenden Eingang (Diode $D_1$) oder am nicht-invertierenden Eingang (Diode $D_2$) des Komparators liegt. Auf diese Weise wird die Schaltschwelle des Komparators 2 auf den positiven bzw. auf den negativen Scheitelwert der Wechselspannungsamplitude gelegt.

SCHALTUNG FÜR EIN AUFZEICHNUNGS- UND/ODER
WIEDERGABEGERÄT MIT EINER OPTOELEKTRONISCHEN
EINRICHTUNG

PATENTANSPRÜCHE

1. Schaltung zur automatischen Anpassung der Schaltschwelle eines Komparators an Pegel- und/oder Amplitudenschwankungen im Ausgangssignal einer Eingangsschaltung, insbesondere für ein Video-, Audio- oder Datenaufzeichnungs- und/oder -wiedergabegerät mit einer optoelektronischen Einrichtung zur Erzeugung von Tachoimpulsen, deren Ausgangssignal dem Eingang des Komparators zugeführt ist, d a d u r c h   g e k e n n z e i c h n e t , daß die beiden Eingänge (+, -) des Komparators durch einen Widerstand ($R_1$) verbunden sind und an den einen Eingang (-) des Komparators ein vom Ausgangssignal der optoelektronischen Einrichtung über den Widerstand ($R_1$) aufladbarer Speicher ($C_1$) angeschlossen ist.

2. Schaltung nach Anspruch 1, d a d u r c h
g e k e n n z e i c h n e t , daß parallel zum
Widerstand ($R_1$) eine Diode ($D_1$ oder $D_2$) liegt.

3. Schaltung nach Anspruch 1 oder 2, d a -
d u r c h g e k e n n z e i c h n e t , daß der
Komparator (2) eine Schmitt-Trigger-Charakteristik
hat.

FIG.1

FIG.2